# EUROPEAN PATENT SPECIFICATION

(11) **EP 1 161 061 B1**
(45) Date of publication and mention of the grant of the patent: **28.09.2005**
(21) Application number: 01202744.7
(22) Date of filing: 24.02.1997
(51) Int. Cl.: H04M 1/02

(54) **User replaceable cover for hand held electronic device**
Vom Nutzer austauschbarer Deckel für tragbares elektronisches Gerät
Couvercle remplaçable par l'utilisateur pour un appareil électronique portable

(30) Priority: 28.02.1996 EP 96102988
(43) Date of publication of application: 05.12.2001
(62) Divisional of application: 97903377.6
(73) Proprietor: Nokia Corporation, 02150 Espoo (FI)
(72) Inventor: Fuhrmann, Thomas, 48249 Dulmen/Buldern (DE); Ortscheid, Annett, 44791 Bochum (DE); Umbach, Dirk, 31139 Hildesheim (DE)
(74) Representative: Patel, Dhiren

(56) References cited:
- WO-A-93/17513
- DE-U- 9 403 890
- US-A- 5 233 506
- US-A- 5 276 588
- PATENT ABSTRACTS OF JAPAN vol. 008, no. 250 (E-279), 16 November 1984 (1984-11-16) & JP 59 126354 A (FUJITSU KK), 20 July 1984 (1984-07-20)

## Description

The invention relates to an electronic device having a housing which has a housing wall with openings for control and/or display elements.

An electronic device of this kind may be for example a telephone, a cordless phone or mobile phone, a pocket calculator, a television set, a radio receiver or for example another electronic domestic appliance which, as a rule, is used by private individuals. If, for personal reasons or because of predetermined requirements, the external appearance of such an electronic device, for example the shape of the housing or its colour, is to be modified, as a rule this must be carried out by a specialist since during such an operation the electronic components present in the housing of the electronic device are usually exposed. Modification of the appearance of the housing of the electronic device is thus laborious, time-consuming and expensive and, moreover, can as a rule only rarely be carried out by private individuals.

US 5,233,506 discloses a fastener for connecting together front and rear housing portions of a housing assembly of a mobile phone. The patent describes various inter-engaging formations which are provided to assemble and permanently hold together the front and rear housing portions.

In accordance with the invention there is provided a cover according to claim 1 and an arrangement according to claim 13. Advantageous refinements of the invention can be found in the subclaims.

An electronic device in accordance with the invention allows the external appearance of the housing to be modified rapidly and easily even by non-professionals.

With the electronic device according to the invention, a user thus has the possibility of modifying the appearance or design of the housing in an extremely short time and without any difficulty by selecting and fitting on an appropriate external wall element. The user can thus more or less change the housing according to his wishes if external elements with different shapes and colours are available to him for this purpose. Even external wall elements made of different materials are possible.

When the housing wall provided with openings is covered by the external wall element, the openings provided in the housing wall and in the external wall element are aligned with one another so that for example the push-button keys which project through the openings can continue to be used even after the external wall element is fitted on to the housing wall or display elements which are inserted into the openings can continue to be read. This also applies to microphones or loudspeakers inserted into opening, for example in the case of cordless telephones.

With the electronic device according to the invention, the electronics provided in the device are always protected against access by the customer when the external appearance of the housing is modified. Therefore, if one external wall element is to be replaced by another in order to give the electronic device a new design, there is no risk of the electronics present in the housing being damaged when the external wall elements are interchanged or of the user being subjected to danger by the electronics present inside the housing. In this respect, the external wall elements could even be interchanged when an electronic device is operating.

According to an advantageous refinement of the invention, the external wall element can engage, at least partially, over further housing walls of the housing so that the design of the housing can be modified to an even greater extent or adapted to the wishes of the user to an even greater degree.

At the same time, the profile of the external wall element can follow the profile of the housing walls of the housing if emphasis is being placed not so much on the modification of the shape of the housing but rather on changing the colour or the type of material of the housing. However, the external wall elements can of course have different shapes which can also deviate from one another to a greater degree provided it is ensured that after the respective external wall elements have been connected to the housing the respective openings in the fitted-on external wall element and in the housing wall in question are aligned with one another.

According to a very advantageous development of the invention, the external wall element can be of, for example, shell-shaped design so that it can be fitted for example with one edge on to a base which projects outwards beyond the side walls of the housing.

Any desired attachment means can be used to attach the external wall element to the housing of the electronic device, but attachment means with press-on/catch closure can preferably be used. They ensure a secure connection between the external wall element and the housing and, moreover, can be easily used without a special tool being required for them.

The invention is explained in detail below with reference to the drawing, in which:
Figure 1 shows a cordless telephone or mobile phone with external wall element removed;
Figure 2 shows the cordless or mobile phone according to Figure 1 with the external wall element fitted on;
Figure 3 shows the external wall element from the underside; and
Figure 4 shows a section through the wall of the external wall element.

The invention is explained below with reference to a cordless telephone or mobile phone which serves as an example of an electronic device. However, the invention can also be used in other electronic devices, for example in wire-connected telephones, in pocket calculators, in television sets, in radio receivers, in CD players, in cassette recorders etc.

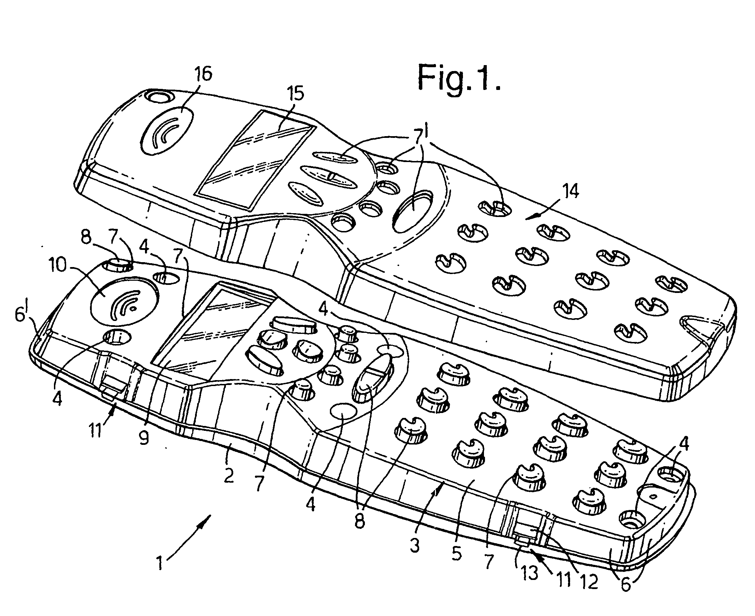

In accordance with Figure 1, a cordless telephone or mobile phone according to the invention has a housing 1 with which a plate-shaped base element 2 and a shell-shaped housing element 3 are associated. The plate-shaped based element 2 and the shell-shaped housing element 3 are connected to one another using screws (not illustrated) which project through openings 4 in the shell-shaped housing element 3 and are screwed into sockets (not illustrated) which are fixedly connected to the inside of the plate-shaped base element 2. Inside the housing 1 there is a carrier plate, attached in a suitable way, for electronic components etc.

The shell-shaped housing element 3 has a housing wall 5 which is located essentially parallel with the plate-shaped base element 2 and at a distance therefrom and is integrally connected to side walls 6 which are supported with their free or lower edge on the plate-shaped base element 2. In this arrangement, the plate-shaped base element 2 projects outwards beyond the side walls 6 by constant distance in its edge region so that a profile with an identical contour is obtained.

In the housing wall 5 there is a plurality of through-openings 7 for electronic components which are mounted on the carrier plate, already mentioned, inside the housing 1, and partially project through the through-openings 7. The through-openings 7 can be provided for example for push-button keys 8, for a display device 9 or for a loudspeaker device/microphone device 10. A corresponding through-opening 7 may also be present in the upper side wall 6 for an aerial.

On the side walls 6, extending in the longitudinal direction of the housing 1, of the shell-shaped housing element 3 there are also in each case two attachment means 11 which are designed as press-on/catch closures at a distance from one another. They are located in each case at the front and rear ends of the telephone. The attachment means 11 have a catch projection 12 which is prestressed outwards in a sprung fashion and can be pressed inwards into the housing 1 counter to the outwardly acting spring force by means of an externally accessible activation element 13. These attachment means serve to attach to the housing 1 an external wall element 14 which is fitted on to the shell-shaped housing element 3 and is also of shell-shaped design.

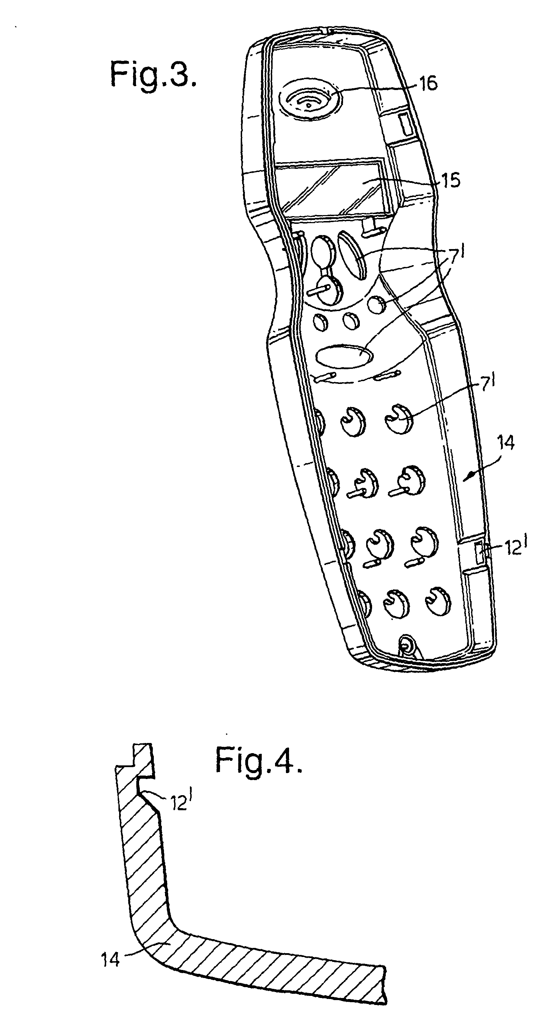

The shell-shaped external wall element 14 which is illustrated in Figures 1 and 3 has approximately the same contour as the shell-shaped housing element 3 but is designed in such a way that it can receive the shell-shaped housing element 3 in it. If the external wall element 14, which is designed as a thin-walled shell, is fitted on to the shell-shaped housing element 3, the shell-shaped external wall element 14 is supported with the free or downwardly pointing edge of its side walls on that part of the plate-shaped base element 2 which projects outwards beyond the shell-shaped housing element 3. Here, the wall thickness of the side walls of the shell-shaped external wall element 14 corresponds to the distance by which the edge of the plate-shaped base element 2 projects outwards beyond the side walls 6, 6' of the shell-shaped housing element 3. As a result, no step remains in the connection area between the shell-shaped external wall element 14 and the plate-shaped base element 2. The height of the side walls of the shell-shaped external wall element 14 can be selected here such that the main face of the external wall element 14 comes to rest at a short distance from the housing wall 5 and as a result does not exert any pressure on the latter.

Likewise, openings 7' which are aligned with the openings 7 in the housing wall 5 of the shell-shaped housing element 3 are provided in the main face of the external wall element 14. Therefore, it is possible to continue to operate the telephone even when the external wall element 14 is fitted on to the shell-shaped housing element 3. At the same time, the push-button keys 8 can be of such a height that they also project outwards beyond the external wall element 14. Openings which are present in the external wall element 14 for the display device 9 and the loudspeaker device/microphone device 10 can be covered, for example by means of a transparent element 15 or a grill 16.

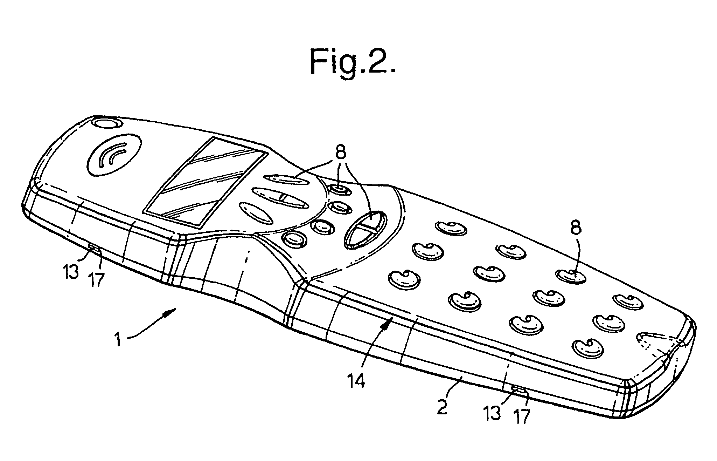

Figure 2 shows the cordless telephone or mobile phone in a state in which the shell-shaped external wall element 14 is fitted on to the shell-shaped housing element 3 and is detachably connected to the housing 1. On the internal faces of the long side walls of the external wall element 14 there are notches 12', one of which is seen in section in Figure 4, for the catch projections 12 of the attachment means 11 so that the catch projections 12 engage in the notches 12' as a result of the outwardly pressing spring force, and thus hold the external wall element on the housing 1. In this state, the activation elements 13 are also pushed outwards but only to such an extent that they do not project beyond the side edge of the plate-shaped base element 2 or of the external wall element 14. The activation elements 13 can extend here in a groove 17 in the upper face of the plate-shaped base element 2. If the activation elements 13 are pressed inwards, that is to say inwards along the groove 17, for example using a pointed object, they move the catch projections 12 correspondingly inwards along with them so that the said catch projections 12 disengage from the notches 12' on the inside of the side walls 6 of the external wall element 14. The external wall element 14 can then be removed from the housing 1.

The external wall element 14 is fitted on to the housing 1 by simply pressing it on. The catch projections 12 then engage automatically in the notches 12'.

The present invention includes any novel feature or combination of features disclosed herein either explicitly or any generalisation thereof irrespective of whether or not it relates to the claimed invention or mitigates any or all of the problems addressed.

The Electronic device may have a housing (1) which has a housing wall (5) with openings (7) for control elements (8) and/or display elements (9,10), characterized by attachment means (11) for detachably connecting to the housing (1) an external wall element (14) which at least partially covers the housing wall (5), the external wall element (14) having openings (7') which are aligned with the openings (7) in the housing wall (5).The external wall element (14) may engage, at least partially, over further housing walls (6, 6') of the housing (1). The profile of the external wall element (14) follows the profile of the housing walls (5, 6, 6') of the housing (1). The external wall element (14) is of shell-shaped design. The housing (1) may have a base (2) which projects beyond side walls (6, 6') of the housing (1) and on to which the external wall element (14) can be fitted with its edge. The attachment means (11) may have at least one press-on/catch closure (12, 13). The electronic device may be designed as a telephone. The telephone may be a cordless telephone or a mobile phone.

In view of the foregoing description it will be evident to a person skilled in the art that various modifications may be made within the scope of the invention as claimed.

## Claims

1. A user attachable/detachable replacement external non-planar cover (14) for replacing a user detachable external non-planar cover (14) of a hand held communications device and thereby modifying the external appearance of the hand held communications device, comprising:
a main face, having an upper surface which is exposed when the cover (14) is attached to the hand held device; and
a side wall joining the main face at its edge and extending downwards, away from the upper surface of the main face whereby the main face and at least portions of the side wall define a cavity for receiving portions of the hand held communications device, the main face having a plurality of openings (7') through to the cavity, wherein the downwardly extending side wall provides at least one element (12') for forming, without the use of a tool, a user releasable attachment to a hand held communications device (1) having had its user detachable cover (14) previously removed.

2. A user attachable/detachable replacement cover (14) as claimed in claim 1, wherein the at least one element (12') provided by the downwardly extending side wall is arranged to form a press-on attachment by engaging with a hand held communications device having had its user detachable cover (14) previously removed.

3. A user attachable/detachable replacement cover (14) as claimed in claim 1 or 2, wherein the at least one element (12') provided by the downwardly extending side wall is recessed.

4. A user attachable/detachable replacement cover (14) as claimed in any preceding claim, wherein the at least one element (12') provided by the downwardly extending side wall comprises a notch located on the interior portion of the side wall.

5. A user attachable/detachable replacement cover (14) as claimed in any preceding claim wherein the plurality of openings (7') includes an array of openings (7'), the array being positioned towards a first end of the main face and each opening (7') being dimensioned to receive a key.

6. A user attachable/detachable replacement cover (14) as claimed in claim 5 wherein the plurality of openings (7') includes at least one loudspeaker opening (16) positioned towards a second end of the main face.

7. A user attachable/detachable replacement cover (14) as claimed in any preceding claim, wherein the plurality of openings (7') includes a display opening having a transparent covering element (15).

8. A user attachable/detachable replacement cover (14) as claimed in any preceding claim wherein the plurality of openings (7') includes at least one key opening of distinctive shape positioned by a display opening .

9. A user attachable/detachable replacement cover (14) as claimed in any preceding designed as a thin-walled shell.

10. A user attachable/detachable replacement cover (14) as claimed in any preceding claim wherein the downwardly extending side wall has an edge which is arranged to support the cover (14) on step-like portions of the hand held communications device and the side wall at the edge has a thickness substantially corresponding to the step size of the step-like portions, such that when the cover (14) is attached to the hand held communications device, substantially no step remains in the connection area between the exterior side wall of the cover (14) and the device.

11. A user attachable/detachable replacement cover (14) as claimed in any preceding claim, wherein the downward extent of the side walls is such that in use the main face of the external cover (14) does not touch or exert pressure on the hand held communications device.

12. A user attachable/detachable replacement cover (14) as claimed in any preceding claim having a grill (16) for a loudspeaker device/microphone device of the hand held communications device.

13. An arrangement comprising:
a hand held electronic device having a housing (1) which has a housing wall (5) with openings (7) for input elements (8) and/or output elements (9,10); and an external non-planar user replaceable cover (14), attached to the housing, which at least partially covers the housing wall (5) and has openings (7') which are aligned with the openings (7) in the housing wall (5), **characterised by** attachment means (11), for detachably connecting together the housing (1) and the external non-planar cover (14), the attachment means being arranged to attach the cover and housing without the use of a tool.

14. An arrangement according to Claim 13, wherein the external non-planar cover (14) engages, at least partially, over further housing walls (6, 6') of the housing (1).

15. An arrangement according to Claim 13 or 14, wherein the profile of the external wall element (14) follows the profile of the housing walls (5, 6, 6') of the housing (1).

16. An arrangement according to Claim 13, 14 or 15, **characterised in that** the external wall element (14) is of shell-shaped design.

17. An arrangement according to any one of Claims 13 to 16, wherein the housing (1) has a base (2) which projects beyond side walls (6, 6') of the housing (1) and on to which the external wall element (14) can be fitted with its edge.

18. An arrangement according to any one of Claims 13 to 17, wherein the attachment means (11) have at least one press-on/catch closure (12, 13).

19. An arrangement according to any one of Claims 13 to 16, **characterised in that** it is designed as a telephone.

20. An arrangement according to Claim 19, **characterised in that** the telephone is a cordless telephone or a mobile phone.

21. An arrangement according to any one of claims 13 to 20, wherein the attachment means automatically attaches the cover and housing when the cover is pressed onto the housing.

22. An arrangement according to any one of claims 13 to 21, wherein the attachment means comprise at least one projection engaging a receptacle.

23. An arrangement according to claim 22, wherein the projection is resilient biased to engage the receptacle.

24. An arrangement according to any one of claims 13 to 23, wherein the electronic device comprises electronic components, susceptible to damage if physically accessible to a user, wherein the housing which defines the openings (7) in the housing, otherwise prevents the user physically accessing said electronic components when the external non-planar cover is detached.

25. An arrangement as claimed in claim 24, wherein the electronic components are connected to a carrier plate which is enclosed by the housing.

## Patentansprüche

1. Von einem Benutzer anbringbare/abnehmbare äußere nicht-planare Ersatz-Abdeckung (14) zum Ersetzen einer von einem Benutzer abnehmbaren äußeren nicht-planaren Abdeckung (14) einer handgeführten Kommunikationsvorrichtung und **dadurch** Modifizieren der äußeren Erscheinung der handgeführten Kommunikationsvorrichtung, umfassend:
- eine Hauptfläche mit einer oberen Oberfläche, die freiliegt, wenn die Abdeckung (14) an der handgeführten Vorrichtung angebracht ist; und
- eine Seitenwand, welche mit der Hauptfläche an deren Rändern verbunden ist und sich nach unten erstreckt, weg von der oberen Oberfläche der Hauptfläche, wodurch die Hauptfläche und mindestens Abschnitte der Seitenwände einen Hohlraum definieren, zum Aufnehmen von Abschnitten der handgeführten Kommunikationsvorrichtung, wobei die Hauptfläche mehrere Öffnungen (7') hindurch bis zu dem Hohlraum aufweist, wobei die sich nach unten erstreckende Seitenwand mindestens ein Element (12') bereitstellt, um ohne die Verwendung eines Werkzeugs eine von einem Benutzer abnehmbare Befestigung an einer handgeführten Kommunikationsvorrichtung (1) zu bilden, bei der ihre von einem Benutzer abnehmbare Abdeckung (14) vorhergehend entfernt worden ist.

2. Von einem Benutzer anbringbare/abnehmbare Ersatz-Abdeckung (14) nach Anspruch 1, wobei das mindestens eine Element (12'), das von der sich nach unten erstreckenden Seitenwand bereitgestellt wird, eingerichtet ist, um eine Druck-Befestigung zu bilden, indem in eine handgeführte Kommunikationsvorrichtung eingegriffen wird, bei der ihre von einem Benutzer abnehmbare Abdeckung (14) vorhergehend entfernt worden ist.

3. Von einem Benutzer anbringbare/abnehmbare Ersatz-Abdeckung (14) nach Anspruch 1 oder 2, wobei das mindestens eine Element (12'), das von der sich nach unten erstreckenden Seitenwand bereitgestellt wird, ausgespart ist.

4. Von einem Benutzer anbringbare/abnehmbare Ersatz-Abdeckung (14) nach irgendeinem der vorhergehenden Ansprüche, wobei das mindestens eine Element (12'), das von der sich nach unten erstreckenden Seitenwand bereitgestellt wird, eine Kerbe aufweist, die auf dem inneren Abschnitt der Seitenwand angeordnet ist.

5. Von einem Benutzer anbringbare/abnehmbare Ersatz-Abdeckung (14) nach irgendeinem der vorhergehenden Ansprüche, wobei die mehreren Öffnungen (7') eine Anordnung von Öffnungen (7') einschließen, wobei die Anordnung in Richtung eines ersten Endes der Hauptfläche angeordnet ist und jede Öffnung (7') bemessen ist, um eine Taste aufzunehmen.

6. Von einem Benutzer anbringbare/abnehmbare Ersatz-Abdeckung (14) nach Anspruch 5, wobei die mehreren Öffnungen (7') mindestens eine Lautsprecheröffnung (16) einschließen, die in Richtung einer zweiten Endfläche der Hauptfläche angeordnet ist.

7. Von einem Benutzer anbringbare/abnehmbare Ersatz-Abdeckung (14) nach irgendeinem der vorhergehenden Ansprüche, wobei die mehreren Öffnungen (7') eine Anzeigeöffnung mit einem transparenten Abdeckelement (15) einschließen.

8. Von einem Benutzer anbringbare/abnehmbare Ersatz-Abdeckung (14) nach irgendeinem der vorhergehenden Ansprüche, wobei die mehreren Öffnungen (7') mindestens eine Tastenöffinung von bestimmter Form einschließen, die bei einer Anzeigeöffnung angeordnet ist.

9. Von einem Benutzer anbringbare/abnehmbare Ersatz-Abdeckung (14) nach irgendeinem der vorhergehenden Ansprüche, ausgelegt als eine dünnwandige Schale.

10. Von einem Benutzer anbringbare/abnehmbare Ersatz-Abdeckung (14) nach irgendeinem der vorhergehenden Ansprüche, wobei die sich nach unten erstreckende Seitenwand einen Rand aufweist, der eingerichtet ist, um die Abdeckung (14) auf stufenartigen Abschnitten der handgeführten Kommunikationsvorrichtung zu halten, und die Seitenwand an dem Rand eine Dicke aufweist, die im Wesentlichen der Stufengröße der stufenartigen Abschnitte entspricht, so dass, wenn die Abdeckung (14) an der handgeführten Kommunikationsvorrichtung angebracht ist, im Wesentlichen keine Stufe in dem Verbindungsbereich zwischen der äußeren Seitenwand der Abdeckung (14) und der Vorrichtung verbleibt.

11. Von einem Benutzer anbringbare/abnehmbare Ersatz-Abdeckung (14) nach irgendeinem der vorhergehenden Ansprüche, wobei die nach unten gerichtete Erstreckung der Seitenwände so ist, dass bei der Verwendung die Hauptfläche der äußeren Abdeckung (14) keinen Druck auf die handgeführte Kommunikationsvorrichtung ausübt oder diese berührt.

12. Von einem Benutzer anbringbare/abnehmbare Ersatz-Abdeckung (14) nach irgendeinem der vorhergehenden Ansprüche mit einem Gitter (16) für eine Lautsprecher/Mikrofon-Vorrichtung der handgeführten Kommunikationsvorrichtung.

13. Anordnung, umfassend:
eine handgeführte Kommunikationsvorrichtung mit einem Gehäuse (1), das eine Gehäusewand (5) mit Öffnungen (7) für Eingabeelemente (8) und/oder Ausgabeelemente (9, 10) aufweist; und eine äußere nicht-planare, von einem Benutzer austauschbare Abdeckung (14), die an dem Gehäuse angebracht ist, die mindestens teilweise die Gehäusewand (5) abdeckt und Öffnungen (7') aufweist, die mit den Öffnungen (7) in der Gehäusewand (5) ausgerichtet sind,
**gekennzeichnet durch** Befestigungsmittel (11), um das Gehäuse (1) und die äußere nicht-planare Abdeckung (14) abnehmbar zu verbinden, wobei die Befestigungsmittel eingerichtet sind, um die Abdeckung und das Gehäuse ohne die Verwendung eines Werkzeugs zu befestigen.

14. Anordnung nach Anspruch 13, wobei die äußere nicht-planare Abdeckung (14) zumindest teilweise über weitere Gehäusewände (6, 6') des Gehäuses (1) eingreift.

15. Anordnung nach Anspruch 13 oder 14, wobei das Profil des äußeren Wandelements (14) dem Profil der Gehäusewände (5, 6, 6') des Gehäuses (1) folgt.

16. Anordnung nach Anspruch 13, 14 oder 15, **dadurch gekennzeichnet, dass** das äußere Wandelement (14) eine schalenförmige Ausgestaltung aufweist.

17. Anordnung nach irgendeinem der Ansprüche 13 bis 16, wobei das Gehäuse (1) eine Basis (2) aufweist, die über die Seitenwände (6, 6') des Gehäuses (1) vorragt, und an welcher das äußere Wandelement (14) mit seinem Rand befestigt werden kann.

18. Anordnung nach irgendeinem der Ansprüche 13 bis 17, wobei die Befestigungsmittel (11) mindestens eine Druck/Rastverriegelung (12, 13) aufweisen.

19. Anordnung nach irgendeinem der Ansprüche 13 bis 16, **dadurch gekennzeichnet, dass** sie als ein Telefon ausgestaltet ist.

20. Anordnung nach Anspruch 19, **dadurch gekennzeichnet, dass** das Telefon ein schnurloses oder ein Mobiltelefon ist.

21. Anordnung nach irgendeinem der Ansprüche 13 bis 20, wobei die Befestigungsmittel automatisch die Abdeckung und das Gehäuse befestigen, wenn die Abdeckung auf das Gehäuse gedrückt wird.

22. Anordnung nach irgendeinem der Ansprüche 13 bis 21, wobei die Befestigungsmittel mindestens einen Vorsprung aufweisen, der in eine Aufnahme eingreift.

23. Anordnung nach Anspruch 22, wobei der Vorsprung elastisch vorgespannt ist, um in die Aufnahme einzugreifen.

24. Anordnung nach irgendeinem der Ansprüche 13 bis 23, wobei die elektronische Vorrichtung elektronische Komponenten umfasst, die beschädigungsempfindlich sind, wenn sie einem Benutzer körperlich zugänglich sind, wobei das Gehäuse, welches die Öffnungen (7) in dem Gehäuse definiert, auf andere Weise verhindert, dass der Benutzer körperlich Zugriff auf die elektronischen Komponenten hat, wenn die äußere nicht-planare Abdeckung abgenommen ist.

25. Anordnung nach Anspruch 24, wobei die elektronischen Komponenten mit einer Trägerplatte verbunden sind, die von dem Gehäuse umschlossen wird.

## Revendications

1. Couvercle non-horizontal externe de remplacement attachable/détachable pour utilisateur (14) destiné à remplacer un couvercle non-horizontal externe détachable pour utilisateur (14) d'un dispositif de communication à main et modifiant ainsi l'apparence extérieure du dispositif de communication à main, comprenant :
une face principale, comportant une surface supérieure qui est exposée lorsque le couvercle (14) est fixé au dispositif à main ; et
une paroi latérale reliant la face principale à son bord et s'étendant vers le bas, s'éloignant de la surface supérieure de la face principale d'où il résulte que la face principale et au moins des parties de la paroi latérale définissent une cavité destinée à recevoir des parties du dispositif de communication à main, la face principale comportant une pluralité d'ouvertures (7') traversant la cavité, d'où il résulte que la paroi latérale s'étendant vers le bas fournit au moins un élément (12') pour former, sans l'utilisation d'un outil, une fixation pouvant être libérée par l'utilisateur pour un dispositif de communication à main (1) dont le couvercle détachable par l'utilisateur (14) a été préalablement enlevé.

2. Couvercle de remplacement attachable/détachable pour utilisateur (14) tel que revendiqué dans la revendication 1, dans lequel au moins un élément (12') disposé sur le côté de la paroi latérale s'étendant vers le bas est placé de façon à former une fixation par pression en s'engageant avec un dispositif de communication à main dont le couvercle détachable par l'utilisateur (14) a été préalablement enlevé.

3. Couvercle de remplacement attachable/détachable (14) tel que revendiqué dans la revendication 1 ou dans la revendication 2, dans lequel au moins un élément (12') disposé sur le côté de la paroi latérale s'étendant vers le bas est enfoncé.

4. Couvercle de remplacement attachable/détachable (14) tel que revendiqué dans l'une quelconque des revendications précédentes, dans lequel au moins un élément (12') placé au niveau de la paroi latérale s'étendant vers le bas comprend une encoche placée dans la partie intérieure de la paroi latérale.

5. Couvercle de remplacement attachable/détachable (14) tel que revendiqué dans l'une quelconque des revendications précédentes dans lequel la pluralité d'ouvertures (7') comprend un réseau d'ouvertures (7'), ce réseau étant orienté vers une première extrémité de la face principale et chaque ouverture (7') étant dimensionnée pour recevoir une clé.

6. Couvercle de remplacement attachable/détachable (14) tel que revendiqué dans la revendication 5 dans lequel la pluralité d'ouvertures (7') comprend au moins une ouverture de haut-parleur (16) placée vers une seconde extrémité de la face principale.

7. Couvercle de remplacement attachable/détachable (14) tel que revendiqué dans l'une quelconque des revendications précédentes, dans lequel la pluralité d'ouvertures (7') comprend une ouverture d'affichage comportant un élément couvrant transparent (15).

8. Couvercle de remplacement attachable/détachable (14) tel que revendiqué dans l'une quelconque des revendications précédentes dans lequel la pluralité d'ouvertures (7') comprend au moins une ouverture de clé de forme distincte placée au niveau d'une ouverture d'affichage.

9. Couvercle de remplacement attachable/détachable (14) tel que revendiqué dans l'une quelconque des revendications précédentes conçu comme une coque à paroi mince.

10. Couvercle de remplacement attachable/détachable (14) tel que revendiqué dans l'une quelconque des revendications précédentes dans lequel la paroi latérale s'étendant vers le bas comporte un bord qui est disposé de façon à soutenir le couvercle (14) sur des parties en forme de marche du dispositif de communication à main et le bord de la paroi latérale possède une épaisseur correspondant substantiellement à la forme de marche des parties en forme de marche, de sorte que lorsque le couvercle (14) est fixé au dispositif de communication à main, il ne reste essentiellement aucune marche dans la région de connexion entre la paroi latérale extérieure du couvercle (14) et le dispositif.

11. Couvercle de remplacement attachable/détachable (14) tel que revendiqué dans l'une quelconque des revendications précédentes, dans lequel l'extension vers le bas des parois latérales est telle qu'en utilisation la face principale du couvercle extérieur (14) ne touche pas et n'exerce pas de pression sur le dispositif de communication à main.

12. Couvercle de remplacement attachable/détachable (14) tel que revendiqué dans l'une quelconque des revendications précédentes comportant une grille (16) destinée à un dispositif de haut-parleur/de microphone du dispositif de communication à main.

13. Dispositiion comprenant :
un dispositif électronique à main comportant un logement (1) qui présente une paroi de logement (5) avec des ouvertures (7) destinées à des éléments d'entrée (8) et/ou à des éléments de sortie (9,10) ; et un couvercle de remplacement non-horizontal externe pour utilisateur (14), fixé au logement, qui couvre au moins partiellement la paroi de logement (5) et comporte des ouvertures (7') qui sont alignées avec les ouvertures (7) de la paroi de logement (5), **caractérisé par** des moyens de fixation (11), destinés à raccorder ensemble de façon détachable le logement (1) et le couvercle non-horizontal externe (14), le moyen de fixation étant disposé de façon à fixer le couvercle et le logement sans l'utilisation d'outil.

14. Disposition selon la revendication 13, dans laquelle le couvercle non-horizontal externe (14) s'engage, au moins partiellement, sur d'autres parois de logement (6, 6') du logement (1).

15. Disposition selon la revendication 13 ou la revendication 14, dans lequel le profil de l'élément de paroi externe (14) suit le profil des parois de logement (5, 6, 6') du logement (1).

16. Disposition selon les revendications 13, 14 ou 15, **caractérisée en ce que** l'élément de paroi externe (14) est d'une conception en forme de coque.

17. Disposition selon l'une quelconque des revendications 13 à 16, dans laquelle le logement (1) a une base (2) qui dépasse au-delà des parois latérales (6, 6') du logement (1) et sur laquelle l'élément de paroi externe (14) peut être ajusté avec son bord.

18. Disposition selon l'une des revendications 13 à 17, dans laquelle le moyen de fixation (11) comporte au moins une enceinte de capture/enfoncement (12, 13).

19. Disposition selon l'une des revendications 13 à 16, **caractérisée en ce qu'**elle est conçue comme un téléphone.

20. Disposition selon la revendication 19, **caractérisée en ce que** le téléphone est un téléphone sans fil ou un téléphone mobile.

21. Disposition selon l'une quelconque des revendications 13 à 20, dans laquelle le moyen de fixation fixe automatiquement le couvercle et le logement lorsque le couvercle est pressé sur le logement.

22. Disposition selon l'une quelconque des revendications 13 à 21, dans laquelle le moyen de fixation comprend au moins une saillie s'engageant dans un réceptacle.

23. Disposition selon la revendication 22, dans laquelle la saillie est sollicitée de façon élastique pour s'engager dans le réceptacle.

24. Disposition selon l'une quelconque des revendications 13 à 23, dans laquelle le dispositif électronique comprend des composants électroniques, susceptibles de s'endommager si l'utilisateur y accède physiquement, dans laquelle le logement qui définit les ouvertures (7) dans le logement, empêche autrement l'accès physique de l'utilisateur auxdits composants électroniques lorsque le couvercle non-horizontal externe est enlevé.

25. Disposition telle que revendiquée dans la revendication 24, dans laquelle les composants électroniques sont reliés à une plaque de support qui est fermée par le logement.
